# EUROPÄISCHE PATENTSCHRIFT

(11) **EP 2 212 483 B1**
(45) Veröffentlichungstag und Bekanntmachung des Hinweises auf die Patenterteilung: **20.02.2013**
(21) Anmeldenummer: 08848967.9
(22) Anmeldetag: 05.11.2008
(51) Int. Cl.: E04B 1/19

(54) **STABTRAGWERK**
BAR-TYPE SUPPORTING FRAMEWORK
STRUCTURE PORTEUSE

(30) Priorität: 12.11.2007 DE 102007054205
(43) Veröffentlichungstag der Anmeldung: 04.08.2010
(73) Patentinhaber: Leiseder, Ulrich, 21465 Reinbeck (DE)
(72) Erfinder: Leiseder, Ulrich, 21465 Reinbeck (DE)
(74) Vertreter: TER MEER - STEINMEISTER & PARTNER GbR
(86) Internationale Anmeldenummer: PCT/EP2008/009321
(87) Internationale Veröffentlichungsnummer: WO 2009/062618

(56) Entgegenhaltungen:
- WO-A-01/91859
- DE-A1- 3 610 686
- DE-U1- 20 215 594

## Beschreibung

Die Erfindung betrifft ein Stabtragwerk mit Knoten und mit Stäben, die durch Eingriffsorgane mindestens in der Richtung quer zu ihrer Längsrichtung formschlüssig zwischen den Knoten gehalten sind.

Stabtragwerke mit steifen Knoten-Stab-Verbindungen werden bisher bei ihrer Montage entweder gesteckt oder mittels Flanschen, Montageblechen oder dergleichen montiert, die ein seitliches Einsetzen ganzer Stäbe zwischen fixierten Knoten ermöglichen. Um die systematisch geringe Steifigkeit bzw. Biege- und Torsionsfestigkeit von Stab-Knoten-Verbindungen zu überwinden, werden die Verbindungen bei hochbelasteten Tragwerken oft als gelenkige Verbindungen modelliert, d.h., das Tragwerk wird als Fachwerk ausgelegt, in dem nur diagonale Elemente zur Steifheit der Maschen und damit des Tragwerks insgesamt führen.

Der Begriff "Stäbe" ist hier nicht auf Stäbe im eigentlichen Sinne beschränkt, sondern umfaßt beispielsweise auch Rohre sowie Flächenelemente wie etwa Glasscheiben oder geschlossene Abdeckungen. Entscheidend ist allein, daß die Kräfte im wesentlichen lokal, über die Knoten, in die benachbarten Stäbe eingeleitet werden.

Die Festigkeit und Steifigkeit der Verbindung ist zum einen von der Verbindungsart, z.B. Klebung, Schweißung oder Pressung, abhängig und zum anderen von den Materialeigenschaften der Stäbe und Knoten. Ein wesentlicher Faktor ist dabei die geometrische Überlappung zwischen den Eingriffsorganen der Stäbe und der Knoten.

DE 102 18 597 A1 beschreibt ein Stabtragwerk mit Stäben aus Holz oder Bambus, die durch Steckverbindungen zwischen den Knoten gehalten sind. Die Steckverbindungen werden durch stirnseitige Rundverzinkungen an den Enden der Stäbe und komplementäre, rotationssymmetrische Aufnahmen in den Knoten gebildet. Nach dem Zusammenstecken der Elemente kann die Verbindung durch Verklebung, Verklammerung oder dergleichen fixiert werden.

Solche gesteckten Stabtragwerke haben den Nachteil, daß es zum Herstellen der Steckverbindung erforderlich ist, die Knoten, die an entgegengesetzten Enden eines Stabes sitzen, relativ zu dem Stab in Längsrichtung dieses Stabes zu bewegen, damit die Eingriffsorgane ineinandergesteckt werden können. Bei einem schon teilweise fertiggestellten Tragwerk ist dies nur möglich, wenn andere Stäbe, mit denen die betreffenden Knoten bereits verbunden sind, vorübergehend auf Biegung beansprucht werden, damit der nötige Bewegungsspielraum für die Knoten geschaffen wird. Je größer die (Zug-) Festigkeit der Stab-Knoten-Verbindungen sein soll, desto größer sollte die Überlappung der Eingriffsorgane sein, und desto stärker müssen die anderen Stäbe auf Biegung beansprucht werden, was wiederum der Biegesteifheit der Stäbe Grenzen setzt.

DE 20016 876 U1 beschreibt ein Stabtragwerk, bei dem die Knoten jeweils aus zwei Teilen zusammengesetzt sind und konkave Aufnahmen für die Enden der Stäbe jeweils zur Hälfte in jedem der beiden Teile des Knotens ausgebildet sind. Hier läßt sich eine große Überlappungstiefe der Verbindungsorgane der Stäbe und Knoten erreichen, ohne daß bei der Montage des Tragwerks die Stäbe auf Biegung beansprucht werden müssen. Allerdings müssen hier die beiden Teile jedes Knotens durch zusätzliche Befestigungsmittel, beispielsweise durch Schrauben zusammengehalten werden, so daß die Festigkeit des Tragwerks insgesamt entscheidend von der Festigkeit dieser zusätzlichen Verbindungsmittel abhängig ist. Bei hohen Festigkeitsanforderungen ergeben sich daraus Beschränkungen hinsichtlich der Materialwahl und der geometrischen Gestaltung der Knoten. DE 3610686 A1 beschreibt ein Stabtsagwerk mit den Merkmalen des Obesbegriffs der Ansprüche 1 und 11.

Aufgabe der Erfindung ist es, ein Stabtragwerk der eingangs genannten Art zu schaffen, das eine hohe Festigkeit aufweist und sich dennoch einfach montieren läßt.

Diese Aufgabe wird erfindungsgemäß mit den in Anspruch 1 oder in Anspruch 11 angegebenen Merkmalen gelöst.

Wenn der Stab aus mehreren Teilen zusammengesetzt ist, können die verschiedenen Teile nacheinander in den Zwischenraum zwischen zwei Knoten eingesetzt werden, ohne daß der Abstand zwischen diesen Knoten verändert werden muß. Wenn anschließend der aus den mehreren Teilen zusammengesetzte Stab um seine Längsachse gedreht wird, so wirken die Eingriffsorgane, die die Verbindung zu dem Knoten herstellen, wie eine Art Bajonettverschluß, der nicht nur den Stab mit dem Knoten verbindet, sondern auch dafür sorgt, daß die mehreren Teile des Stabes durch die Knoten formschlüssig zusammengehalten werden.

Wenn jeder der beiden Knoten aus mehreren Teilen zusammengesetzt ist, kann der Stab zunächst in entsprechende Aufnahmen der beiden Teilknoten eingelegt werden, wonach die Knoten durch Hinzufügen des jeweiligen anderen Teils komplettiert werden. Die Fixierung der Teile der Knoten aneinander erfolgt dann jedoch nicht mit Hilfe zusätzlicher Befestigungsmittel, sondern wiederum durch eine Drehung des Stabes um seine Längsachse. Bei dieser Drehung treten die Eingriffsorgane des Stabes mit den komplementären Eingriffsorganen beider Teile des Knotens in Eingriff, so daß sie die Teile des Knotens zusammenhalten.

Wenn sowohl die Stäbe als auch die Knoten aus mehreren Teilen zusammengesetzt sind, wirken die beiden oben beschriebenen Effekte in Kombination.

Der Vorteil besteht in jedem Falle darin, daß eine formschlüssige Fixierung aller beteiligten Elemente, d.h., der Teile der Stäbe und der Knoten, ohne zusätzliche Befestigungsmittel erreicht werden kann, so daß eine einfache Montage ermöglicht wird, und ohne daß die Knoten in Längsrichtung des sie verbindenden Stabes bewegt werden müssen, wie es bei einer Steckverbindung erforderlich wäre. Folglich können bei dem erfindungsgemäßen Stabtragwerk die Stäbe und die Knoten sowie deren Verbindungen im Prinzip beliebig steif ausgelegt werden, und es bestehen auch keine Beschränkungen hinsichtlich des Ausmaßes der Überlappung der Eingriffsorgane der Knoten und Stäbe. Insgesamt läßt sich so mit einfachen Mitteln ein überaus stabiles Stabtragwerk mit verhältnismäßig zierlich gestalteten Knoten erreichen.

Vorteilhafte Ausgestaltungen und Weiterbildungen der Erfindung sind in den Unteransprüchen angegeben.

Die Erfindung ist besonders vorteilhaft für Stabtragwerke, deren Stäbe längsverlaufende Fasern aufweisen, die ihnen eine hohe Zugfestigkeit verleihen, also beispielsweise Tragwerke mit Stäben aus Holz, Bambus, faserverstärktem Kunststoff und dergleichen, ebenso für Tragwerke mit Knoten aus faserigem Material, z. B. aus Schichtholz. Anders als herkömmliche Verbindungsmittel wie Schrauben, Querstifte und dergleichen führen die erfindungsgemäßen Eingriffsorgane nicht zu einer Schwächung oder einem Aufspalten des Materials in Laufrichtung der Fasern. Bei geklebten Verbindungen führen außerdem Zugbeanspruchungen dazu, daß die Fasermaterialien an den Klebstellen auf Scherung beansprucht werden. Die durch die Erfindung ermöglichte Vergrößerung der Überlappungszone und damit der Klebflächen trägt dann zu einer wesentlichen Verbesserung der Zugfestigkeit bei.

Bei den Stäben kann es sich auch um Verbundbauteile aus mehreren Materialien handeln, z. B. Bambusstäbe mit Endstücken aus Metall oder dgl., die die Eingriffsorgane bilden.

Die Teile der Knoten und/oder Stäbe können selbstverständlich zusätzlich aneinander fixiert werden, beispielsweise durch Verkleben, Verklammern, Umwickeln oder zusätzliche Verstrebungen zwischen verschiedenen Stäben. Im Fall einer Verklebung können nicht nur die Teile der Stäbe und die Teile der Knoten miteinander verklebt werden, sondern auch die Kontaktflächen zwischen den Eingriffsorganen der Stäbe und Knoten, nachdem diese in ihre endgültige Position gedreht worden sind. Beispielsweise können diese Flächen vor der Montage mit einem Leim beleimt werden, der erst aushärtet, nachdem die Stäbe in ihre endgültige Verriegelungsposition gedreht worden sind. Alternativ ist es denkbar, den Leim an den Berührungsflächen der Eingriffsorgane in Form von Kissen zu applizieren, die aufplatzen und den Leim oder Kleber freisetzen, sobald die Eingriffsorgane miteinander in Eingriff treten. Ebenso ist es möglich, die komplementären Eingriffsorgane etwas unrund zu gestalten, so daß sie bei Verdrehen zugleich radial miteinander verpresst werden. Auf diese Weise läßt sich eine stabile Klemmverbindung und/oder eine verpresste und daher festere Klebverbindung erreichen.

Sofern die Knoten aus mehreren Teilen zusammengesetzt sind und aus Naturholz bestehen, ist es aus Festigkeitsgründen zweckmäßig, wenn die Fasern in den verschiedenen Teilen des Knotens an der Teilungsfläche, an der sie miteinander verklebt werden, wie bei Sperrholz etwa rechtwinklig zueinander verlaufen.

Die Eingriffsorgane können auch so gestaltet werden, daß sie nicht nur in Querrichtung des Stabes, sondern auch in dessen Längsrichtung eine formschlüssige Verbindung zwischen Stäben und Knoten herstellen. In dem Fall kann zudem die relative Verdrehung von Knoten und Stäben dazu genutzt werden, den Stab fest zwischen den an seinen beiden Enden sitzenden Knoten zu verspannen.

Alternativ läßt sich eine solche Verspannung auch durch ein eingebettetes Unternetzwerk erreichen, beispielsweise ein Netzwerk aus zugbelastbaren Seilen oder Drähten, die in durchgehenden Hohlräumen der Stäbe verlaufen und innerhalb der Knoten des Tragwerks miteinander verbunden sind. Wenn sowohl die Stäbe als auch die Knoten des Tragwerks aus mehreren Teilen bestehen oder zumindest geschlitzt sind, kann ein weitgehend vorgefertigtes Unternetzwerk während der Montage mit eingelegt werden.

Da die Eingriffsorgane des erfindungsgemäßen Tragwerks aufgrund der Drehbarkeit ohnehin eine gewisse Rotationssymmetrie aufweisen müssen, bietet es sich an, diese Eingriffsorgane ringförmig oder teilringförmig zu gestalten. Daraus ergibt sich die Möglichkeit, die Stäbe als Hohlstäbe auszubilden, die an den Enden über Hohlräume in den Knoten miteinander verbunden sind. Auf diese Weise erhält man innerhalb des Tragwerkes ein Leitungsnetzwerk, das für elektrische Leitungen, Signalleitungen, Gas- oder Flüssigkeitsleitungen oder dergleichen genutzt werden kann. Durch Verkleben oder Verpressen der Eingriffsorgane des Tragwerks läßt sich das Netzwerk der in den Stäben und Knoten gebildeten Hohlräume auch hermetisch nach außen abdichten, so daß es unmittelbar als Leitungssystem für fluide Medien genutzt werden kann.

Im folgenden werden Ausführungsbeispiele der Erfindung anhand der Zeichnung näher erläutert.

Es zeigen:
- Fig. 1: eine perspektivische Ansicht eines teilweise montierten Stabtragwerks gemäß der Erfindung;
- Fig. 2: eine perspektivische Detaildarstellung von Eingriffsorganen an einem erfindungsgemäßen Stabtragwerk;
- Fig. 3 und 4: die Eingriffsorgane nach Fig. 2 in unterschiedlichen Stellungen während der Montage;
- Fig. 5: eine perspektivische Ansicht eines Stabes eines erfindungsgemäßen Stabtragwerks;
- Fig. 6: einen Schnitt durch einen Eingriffsbereich eines Tragwerks mit einem Stab nach Fig. 5;
- Fig. 7 bis 10: Beispiele für unterschiedliche gestaltete Eingriffsorgane an dem Stabtragwerk;
- Fig. 11: eine perspektivische Ansicht eines Knotens eines Stabtragwerks gemäß einem weiteren Ausführungsbeispiel;
- Fig. 12 bis 15: unterschiedliche Stadien bei der Montage eines Stabtragwerks gemäß einem weiteren Ausführungsbeispiel der Erfindung:
- Fig. 16: einen Schnitt durch einen Teil eines erfindungsgemäßen Stabtragwerks;
- Fig. 17: einen Schnitt durch einen einzelnen Stab mit einem Spannmechanismus:
- Fig. 18: einen Schnitt durch einen Rahmen eines Stabtragwerks mit einem plattenförmigen Füllelement, in einem Stadium während der Montage; und
- Fig. 19: einen Schnitt durch den fertig montierten Rahmen gemäß Fig. 18.

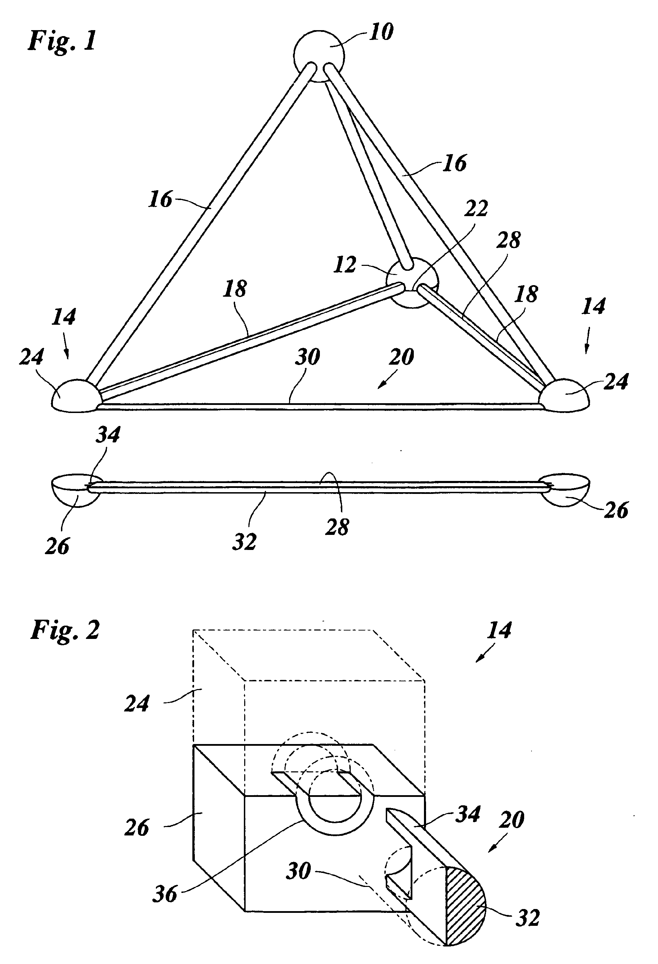

In Fig. 1 ist ein einfaches Beispiel eines Stabtragwerks dargestellt, das hier die Form eines Tetraeders halt, mit kugelförmigen Knoten 10, 12, 14, die durch Stäbe 16, 18, 20 miteinander verbunden sind. Bei der Montage dieses Tragwerks können die Stäbe 16 in bekannter Weise in entsprechende Steckaufnahmen der Knoten 10, 12 und 14 eingesteckt werden. Wenn jedoch die unteren Stäbe 18 und 20 eingesetzt werden sollen, wäre eine solche Steckverbindung nicht mehr möglich, ohne die Stäbe 16 vorübergehend auseinanderzubiegen, um ausreichend Platz zwischen den Knoten 12 und 14 zu schaffen.

Aus diesem Grund sind bei dem hier vorgeschlagenen Tragwerk die Knoten 12, 14 und auch die sie verbindenden Stäbe 18, 20 jeweils aus zwei Teilen zusammengesetzt. Die Knoten 12, 14 sind an waagerechten Teilungsebenen 22 in zwei Teile (Halbkugeln) 24, 26 unterteilt. Entsprechend sind die Stäbe 18 und 20 an längsverlaufenden Teilungsebenen 28 in Halbstäbe 30, 32 unterteilt. Bei den Stäben 18 verlaufen die Teilungsebenen 28 vertikal. Die Knoten 14 sind dagegen in Fig. 1 in einem noch nicht fertig montierten Zustand dargestellt, in dem die beiden Halbkugeln 24, 26 noch nicht zu einem fertigen Knoten 14 zusammengesetzt wurden und auch die Halbstäbe 30, 32 noch nicht zu dem kompletten Stab 20 zusammengesetzt wurden.

Jeder Halbstab 30, 32 ist an seinen Enden durch Eingriffsorgane 34, deren Aufbau weiter unten näher beschrieben werden soll, bereits mit den zugehörigen Halbkugeln 24, 26 verbunden. Diese Eingriffsorgane sind so gestaltet, daß sich der Stab 30 zwischen den beiden Halbkugeln 24 einfügen läßt, ohne daß der Abstand zwischen diesen beiden Halbkugeln verändert werden muß. Wenn nun die Halbkugeln 26 und der Halbstab 32 angesetzt werden, um die Knoten 14 und den Stab 20 zu komplettieren, so wird anschließend der Stab 20 um 90° um seine Längsachse gedreht, so daß die Teilungsebene 28 in die vertikale Position gelangt, wie sie bei den Stäben 18 gezeigt ist. Die Eingriffsorgane 34 an den Enden der beiden Halbstäbe 30 und 32 treten dabei jeweils mit entsprechenden (in Fig. 1 nicht gezeigten) Eingriffsorganen beider Halbkugeln 24. 26 in Eingriff, so daß die beiden Halbkugeln 24, 26 jedes Knotens und auch die beiden Halbstäbe 30, 32 jedes Stabes formschlüssig verriegelt werden und nicht mehr auseinanderfallen können. Auf diese Weise erhält man ein sehr stabiles, starres Stabtragwerk, zu dessen Fixierung im Prinzip weder Klebungen noch der Einsatz sonstiger Befestigungsmittel wie Schrauben, Klammern oder dergleichen erforderlich ist.

Wahlweise ist eine zusätzliche Fixierung, etwa durch Verklebung der Halbstäbe 30, 32 und auch der Halbkugeln 24, 26 selbstverständlich möglich. Auch die Berührungsflächen der Eingriffsorgane 34 können mit den entsprechenden Eingriffsorganen der Halbkugeln verklebt werden, wodurch insbesondere ein Zurückdrehen des Stabes in die entriegelte Stellung verhindert wird. Wahlweise kann die Verdrehsicherung jedoch auch auf irgendeine andere bekannte Art erfolgen, etwa durch in die Eingriffsorgane 34 und die entsprechenden Aufnahmen in den Knoten eingearbeitete Anschläge und Widerhaken, die den Drehwinkel der Stäbe begrenzen und ein Zurückdrehen verhindern. Ebenso können als Verdrehsicherung auch Splinte verwendet werden, die im Bereich der Knoten durch die Eingriffsorgane hindurchgesteckt werden. Diese Splinte dienen hier jedoch ausschließlich als Verdrehsicherung und sind anders als bei herkömmlichen Tragwerken mit zusammengesetzten Knoten nicht für die Grundstabilität des Tragwerks erforderlich.

Zur näheren Illustration einer möglichen Gestaltung der Eingriffsorgane zeigt Fig. 2 eine perspektivische Darstellung eines in diesem Fall quaderförmigen Knotens 14, der aus zwei Teilen 24, 26 zusammengesetzt ist, die den Halbkugeln in Fig. 1 entsprechen. Das Teil 24 ist nur strichpunktiert angedeutet. Von dem Stab 20 ist nur ein abgeschnittenes Ende des Halbstabes 32 in durchgezogenen Linien dargestellt, während der komplementäre Halbstab 30 nur strichpunktiert angedeutet ist. Das Eingriffsorgan 34 jedes Halbstabes hat in diesem Beispiel die Form eines halbzylindrischen, hohlen und am freien Ende offenen Fortsatzes des betreffenden Halbstabes. Die halbzylindrischen Fortsätze beider Halbstäbe 30 und 32 ergänzen sich daher zu einem hohlen Vollzylinder. Zu den Eingriffsorganen 34 komplementäre Eingriffsorgane 36 in den Teilen 24, 26 des Knotens 14 haben die Form von halbzylindrischen Nuten, die sich nach dem Zusammensetzen der Teile zu einer Ringnut ergänzen.

Die Eingriffsorgane 34 und 36 sind in Fig. 2 jeweils in der Winkelstellung gezeigt, die ihrer Eingriffsposition entspricht, doch sind diese Eingriffsorgane axial versetzt dargestellt, damit die Strukturen deutlicher erkennbar sind.

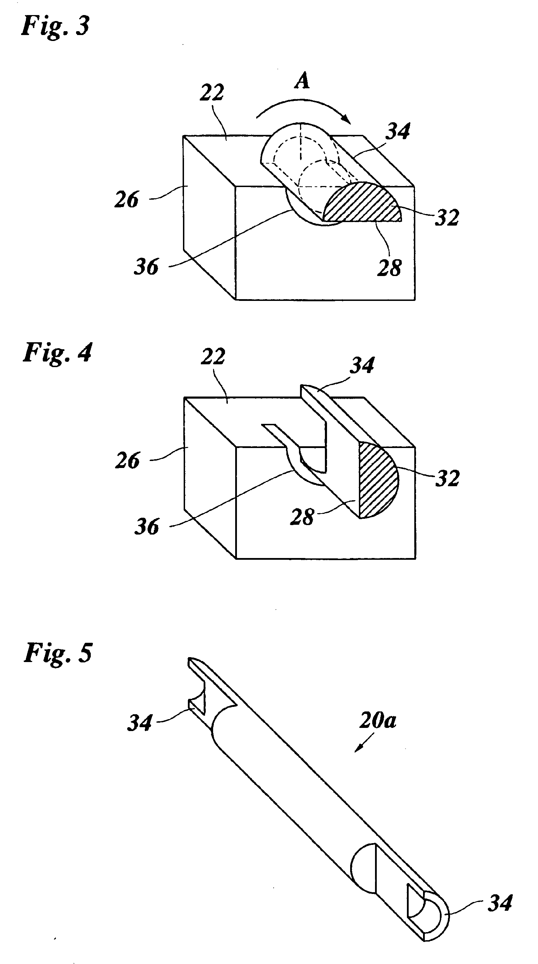

In Fig. 3 und 4 ist gezeigt, wie die Verbindung zwischen dem Halbstab 32 und dem Teil 26 eines Knotens hergestellt wird. Der Halbstab wird zunächst so gehalten, daß eine Oberfläche, die der Teilungsebene 28 entspricht, der Oberfläche des Teils 26 zugewandt ist, die der Teilungsebene 22 entspricht, und daß die Eingriffsorgane 34 und 36 miteinander fluchten (Fig. 3). Anschlie-βend wird der Halbstab 32 in Richtung des Pfeils A um die Längsmittelachse des späteren kompletten Stabes 20 gedreht, so daß das Eingriffsorgan 34 in das nutförmige Eingriffsorgan 36 eintritt. Zunächst wird der Halbstab um einen Drehwinkel von 180° gedreht, so daß das Eingriffsorgan 34 vollständig in dem Eingriffsorgan 36 aufgenommen wird und die Teilungsebenen 22 und 28 miteinander bündig sind. Dieser Zustand ist in Fig. 3 und 4 nicht gezeigt, entspricht aber dem Zustand des Halbstabes 32 in Fig. 1.

Entsprechend verfährt man dann mit dem anderen Halbstab 30 und den zugehörigen Teilen 24 der Knoten. Anschließend werden die Teile der Knoten 14 und des Stabes 20 zusammengesetzt und wahlweise miteinander verklebt, und schließlich wird der dann komplettierte Stab 20 um 90° zurückgedreht, so daß der Halbstab 32 die in Fig. 4 gezeigte Position einnimmt. In diesem Zustand stehen die Eingriffsorgane 34, 36 immer noch miteinander in Eingriff, jedoch nicht mehr auf einem Bogen von 180°, sondern nur noch auf einem Bogen von 90°. Dafür steht jedoch das Eingriffsorgan 34 des Halbstabes 32 auch mit dem nutförmigen Eingriffsorgan des in Fig. 4 nicht gezeigten Teils 24 des Knotens in Eingriff. Die halbzylindrischen Eingriffsorgane 34 ergänzen sich dann zu einem hohlen Vollzylinder, der einen zylindrischen Zapfen umschließt, der von den nutförmigen Eingriffsorganen 36 begrenzt wird und je zur Hälfte durch das Teil 24 und das Teil 26 gebildet wird. Auf diese Weise werden die beiden Teile 24, 26 des Knotens nunmehr in der Richtung quer zur Längsrichtung des Stabes 20 formschlüssig zusammengehalten, ohne daß es auf die Verklebung zwischen ihnen noch ankommt. Umgekehrt werden auch die beiden Halbstäbe 30 und 32 durch die Eingriffsorgane 36 der Knoten formschlüssig zusammengehalten.

Wahlweise können vor der oben beschriebenen Montage auch die inneren und äußeren Oberflächen der Eingriffsorgane 34 (und/oder 36) beleimt werden, wodurch der Stab 20 nach dem Aushärten des Klebers in seiner Winkelstellung fixiert wird. Die formschlüssige Verriegelung der Teile aneinander bleibt dann dauerhaft erhalten, und die Festigkeit, insbesondere die Zugfestigkeit, der Knoten-Stab-Verbindung ist von der Stärke (Dicke und Länge) der Eingriffsorgane 34 abhängig, jedoch nicht von der Klebkraft, mit der die verschiedenen Teile miteinander verklebt sind. Da die Stab-Knoten-Verbindungen nicht durch Steckverbindungen gebildet werden, läßt sich das Ausmaß der Überlappung zwischen den Eingriffsorganen 34 und 36, hier also die Länge der halbzylindrischen Strukturen, so groß wählen, daß die erforderliche Festigkeit erreicht wird, ohne daß damit die Montage des Tragwerkes erschwert wird. Eine Verlängerung dieser Überlappung vergrößert zugleich auch die Klebfläche und damit insbesondere die Zugfestigkeit.

Die Stäbe des Stabtragwerks brauchen nicht notwendigerweise an ihrer Längsmittelebene in zwei Halbstäbe aufgeteilt zu sein. Fig. 5 zeigt ein Beispiel eines Stabes 20a, dessen Mittelteil als runder Vollstab ausgebildet ist. Dieser Stab 20a kann wahlweise durch Teile, die komplementär zu den beiden Endabschnitten ausgebildet sind, zu einem Vollstab komplettiert werden, der sich dann in gleicher Weise wie der oben beschriebene Stab 20 zwischen Knoten 14 einsetzen läßt.

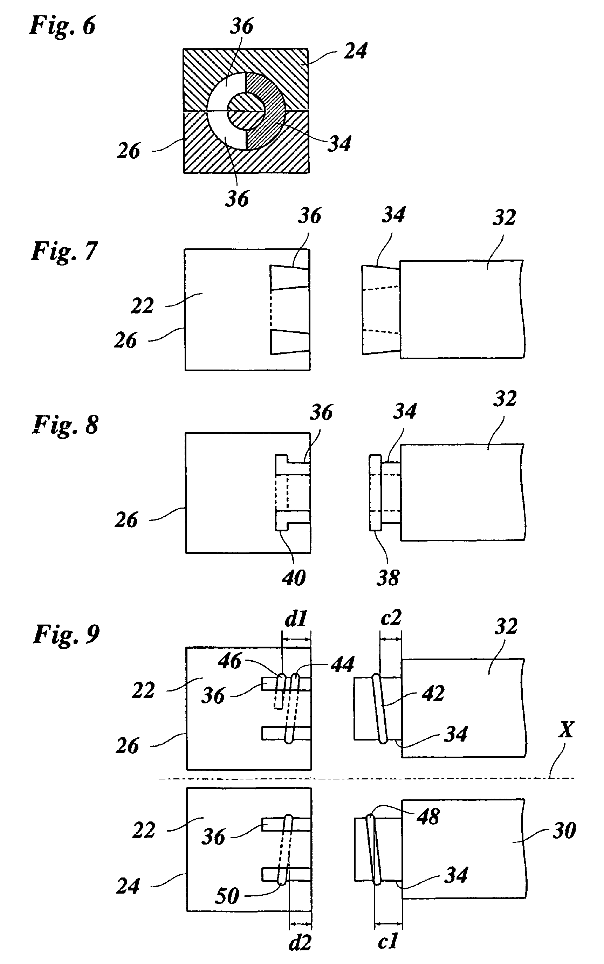

Wenn die Stabilitätsanforderungen nicht so hoch sind, kann ein Stab mit der in Fig. 5 gezeigten Grundkonfiguration jedoch auch allein, ohne zusätzliche komplementäre Teile verwendet werden. Der vollzylindrische mittlere Abschnitt sollte sich dann bis unmittelbar an die halbzylindrischen Eingriffsorgane 34 erstrecken und somit den Zwischenraum zwischen den Knoten vollständig ausfüllen. Fig. 6 zeigt einen Schnitt durch das Eingriffsorgan 34 eines solchen Stabes und durch die Teile 24, 26 des Knotens in der Eingriffsposition. Man erkennt, daß auch hier das einzige Eingriffsorgan 34 des Stabes in die Eingriffsorgane 36 beider Knotenteile eingreift und diese formschlüssig zusammenhält.

Auch die meisten der nachstehend beschriebenen Varianten lassen sich wahlweise mit einteiligen oder mehrteiligen Stäben realisieren.

Fig. 7 zeigt eine Ausführungsform ähnlich derjenigen nach Fig. 2 bis 4, bei der jedoch die Eingriffsorgane 34, 36 zueinander komplementäre Schwalbenschwanzprofile haben. In der Zeichnung blickt man auf die Oberfläche des Teils 26, die in der Teilungsebene 22 liegt, und auf die von der Teilungsebene abgewandte, gerundete Rückseite des Halbstabes 32. Die schwalbenschwanzförmigen Eingriffsorgane 34 und 36 stellen auch in Längsrichtung des Stabes 20 bzw. des Halbstabes 32 eine formschlüssige Verbindung zwischen dem Stab und dem angrenzenden Knoten her.

Fig. 8 zeigt in ähnlicher Darstellung wie in Fig. 7 eine Variante, bei welcher der Formschluß nicht durch Schwalbenschwanzprofile, sondern durch einen Bund 38 bzw. eine Ringnut 40 an den Eingriffsorganen 34a, 36 erreicht wird.

Bei einem in Fig. 9 gezeigten Ausführungsbeispiel weisen die Eingriffsorgane 34 und 36 gewindeartige Strukturen auf, die sowohl einen Formschluß in Längsrichtung der Stäbe wie auch eine Verspannung der Stäbe und Knoten in dieser Richtung ermöglichen. Gezeigt sind hier beide Teile 24, 26 des Knotens, jeweils mit Blick auf die Teilungsebene 22, sowie beide Halbstäbe 30, 32, jeweils mit Blick auf die von der Teilungsebene 28 abgewandte Seite.

Das Eingriffsorgan 34 des Halbstabes 32 hat auf seiner äußeren Umfangsfläche, die sich über einen Bogenwinkel von 180° erstreckt, einen gewindeförmig verlaufenden Wulst 42, und das Eingriffsorgan 36 des Teils 26 des Knotens weist zwei gewindeförmige Nuten 44, 46 auf, die beide Teil eines zu dem Wulst 42 komplementären Gewindegangs sind. Bei dem Halbstab 30 weist das Eingriffsorgan 34 einen entsprechenden Wulst 48 auf, der jedoch in einer anderen axialen Position als der Wulst 42 liegt, und das Teil 24 des Knotens hat an seinem Eingriffsorgan 36 eine dazu komplementäre Nut 50.

Zur Verbindung des Halbstabes 32 mit dem Teil 26 wird das Eingriffsorgan 34 in eine Position gebracht, in der das in der Zeichnung obere Ende des Wulstes 42 mit dem in der Zeichnung oberen Ende der Nut 44 fluchtet. Anschließend wird der Halbstab 32 um 180° im Uhrzeigersinn gedreht, so daß sich das Eingriffsorgan 34 in das Eingriffsorgan 36 hineinschraubt. Entsprechend verfährt man mit dem Halbstab 30 und dem Teil 24. Anschließend werden die beiden Knotenteile und die Halbstäbe zusammengefügt. In der Zeichnung würde das bedeuten, daß das Teil 24 um die Achse X in Fig. 9 auf das Teil 26 geklappt wird. Das in Fig. 9 obere Ende der Nut 50 kommt dabei in eine Lage, in der es mit dem unteren Ende der Nut 44 fluchtet. Wenn nun der durch die beiden Halbstäbe 30 und 32 gebildete Stab um 90° in Einschraubrichtung weitergedreht wird, so tritt der Wulst 42 in die Nut 50 des Teils 24 ein, während gleichzeitig der Wulst 48 teilweise aus der Nut 50 austritt (und damit Platz für den Wulst 42 schafft) und in die Nut 46 des Teils 26 eintritt. Durch diese Einschraubbewegung werden beide Halbstäbe 32, 34 fest gegen die Teile 24 und 26 des Knotens gespannt. Dies erfordert eine korrekte Wahl der axialen Position der Wülste 42 und 48 und der Nuten 44, 46 und 50. Speziell muß dazu das in Fig. 9 eingezeichnete Maß d1 gleich dem Maß c1 sein und das Maß d2 gleich dem Maß c2. Die Maße c1 und c2 geben dabei die axiale Position des vorauslaufenden Endes des Wulstes 48 bzw. 42 in Bezug auf den Fußpunkt des Eingriffsorgans 34 an, und die Maße d1 und d2 geben die axiale Position dieses vorauslaufenden Endes des Wulstes 48 bzw. 42 im vollständig eingeschraubten Zustand innerhalb der Nut 46 bzw. 50 an.

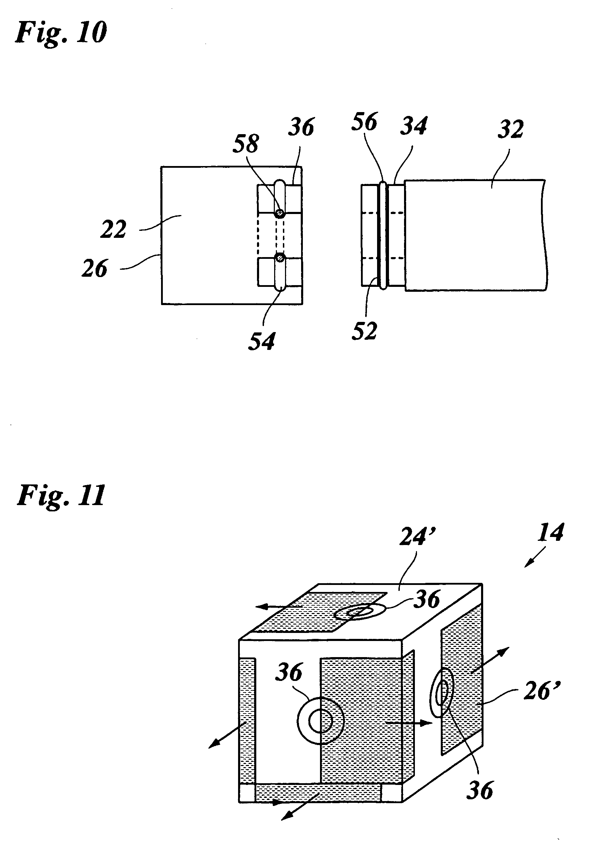

Fig. 10 zeigt eine Ausführungsvariante, bei der die Eingriffsorgane 34 und 36 jeweils in der inneren und äußeren Halbzylinder-Umfangsfläche eine in Umfangsrichtung verlaufende Nut 52 bzw. 54 in einander entsprechenden Positionen aufweisen. Wenn die Eingriffsorgane ineinander eingedreht werden, können zusätzlich halbringförmige Drähte oder Schnüre 56. 58 eingeführt werden, die dann einen Formschluß in axialer Richtung herstellen.

Figur 11 zeigt eine weitere Ausführungsform des Knotens 14. Dieser Knoten ist würfelförmig und weist in jeder seiner sechs Seiten ein Eingriffsorgan 36 für einen Stab auf, so daß der Knoten an zentraler Stelle in einem Raumfachwerk eingesetzt werden kann, bei dem Stäbe in allen sechs Raumrichtungen von dem Knoten ausgehen. Damit all diese Stäbe in der oben beschriebenen Weise montiert werden können, ist der Knoten gemäß Figur 11 mehrteilig aufgebaut, mit einem Basisteil 24' und sechs Schiebeteilen 26', die jeweils so in einer der Flächen des Würfels angeordnet sind, daß eine Teilungslinie zwischen dem Schiebeteil und dem Basisteil durch die Mitte des Eingriffsorgans 36 verläuft. Wie durch Pfeile in Figur 11 veranschaulicht wird, lassen sich die Schiebeteile 26' jeweils rechtwinklig zu der genannten Teilungslinie von dem Basisteil 24' abziehen und - nach Einsetzen der Halbstäbe in das Basisteil 24' und das Schiebeteil 26' - in entgegengesetzter Richtung wieder einschieben, um die Halbstäbe zu einem Vollstab zusammenzufügen.

Auf analoge Weise lassen sich mehrteilige Knoten in nahezu beliebigen geometrischen Formen für verschiedenartige Tragwerkkonfigurationen herstellen.

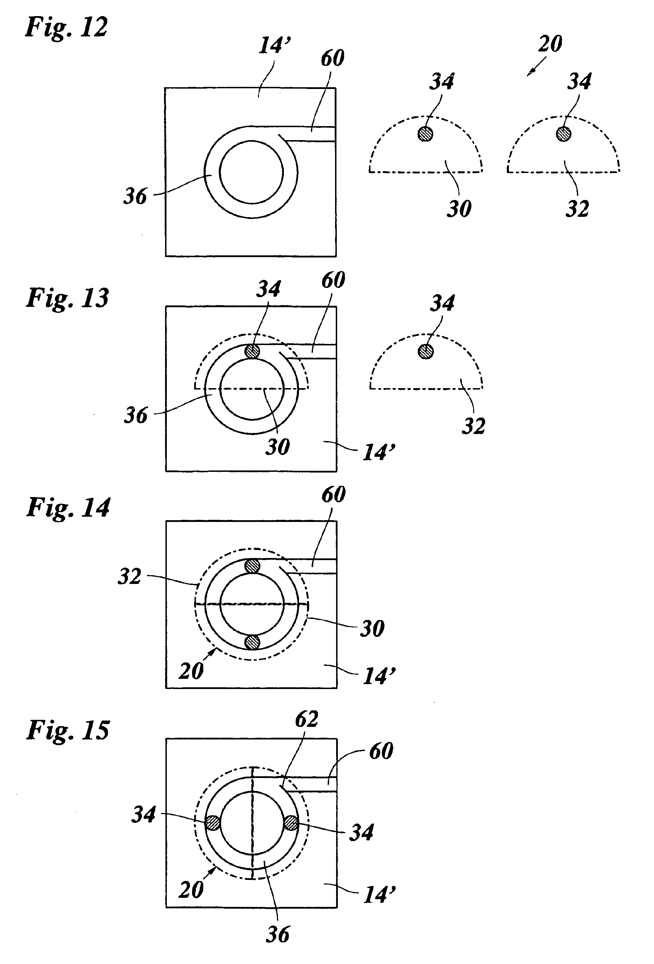

Figuren 12 bis 15 illustrieren die Montage eines Tragwerks mit einem einteiligen Knoten 14' und einem mindestens zweiteiligen Stab 20. Das Eingriffsorgan 36 des Knotens wird wieder durch eine ringförmige Nut gebildet, die in diesem Fall jedoch durch eine Einschleusungsnut 60 mit einer Seitenfläche des Knotens verbunden ist. Der Stab 20 wird wieder durch zwei komplementäre Halbstäbe 30. 32 gebildet, doch sind die Eingriffsorgane 34 in diesem Fall nicht halbzylindrisch, sondern als exzentrisch angeordnete vorspringende Zapfen ausgebildet. Das Profil der Halbstäbe 30, 32 ist hier nur strichpunktiert angedeutet, und die als Eingriffsorgane 34 dienenden Zapfen sind im Schnitt dargestellt.

In Figur 12 ist noch keiner der Halbstäbe mit dem Knoten 14' verbunden. Dann wird zunächst der Halbstab 30 zwischen dem Knoten 14' und einem entsprechenden Knoten am entgegengesetzten Ende des Halbstabes eingesetzt. Dabei wird das Eingriffsorgan 34 durch die Einschleusungsnut 60 bewegt, bis die in Figur 13 gezeigte Konfiguration erreicht ist.

Der Halbstab 30 wird dann um 180° um die Mittelachse des ringförmigen Eingriffsorgans 36 (und damit die Mittelachse des späteren Vollstabes) gedreht, wobei sich sein Eingriffsorgan 34 durch die ringförmige Nut bewegt, und der zweite Halbstab 32 wird in entsprechender Weise über die Einschleusungsnut 60 eingeführt, um den Stab 20 zu komplettieren, wie in Figur 14 dargestellt ist. Der Stab 20 wird dann als ganzes um 90° in die in Figur 15 gezeigte Position gedreht, so daß seine Eingriffsorgane 34 die in Figur 15 gezeigte Position einnehmen und im Zusammenwirken mit dem Eingriffsorgan 36 die beiden Halbstäbe formschlüssig zusammenhalten.

Wahlweise können auch hier die Halbstäbe miteinander verklebt werden, wodurch verhindert wird, daß sich die Halbstäbe nacheinander wieder über die Einschleusungsnut 60 herausziehen lassen.

Im hier gezeigten Beispiel ist zudem an der Einmündung der Einschleusungsnut 60 in das Eingriffsorgan 36 eine Rücklaufsperre 62 (Figur 15) in der Form einer federnden Klinke angeordnet, die beim Einführen des zapfenförmigen Eingriffsorgans 34 ausweicht, jedoch eine Rückkehr des Zapfens in die Einschleusungsnut 60 verhindert.

Wahlweise kann auch die Einschleusungsnut 60 durch einen Stopfen verschlossen werden, oder diese Einschleusungsnut und/oder die als Eingriffsorgan 36 dienende Ringnut oder Teile davon können mit einer Vergußmasse ausgespritzt werden.

Das in Figuren 12 bis 15 dargestellte Prinzip läßt sich auf Stabtragwerke verallgemeinern, deren Stäbe im Bereich der Eingriffsorgane aus drei oder mehr (sektorförmigen) Teilen zusammengesetzt sind.

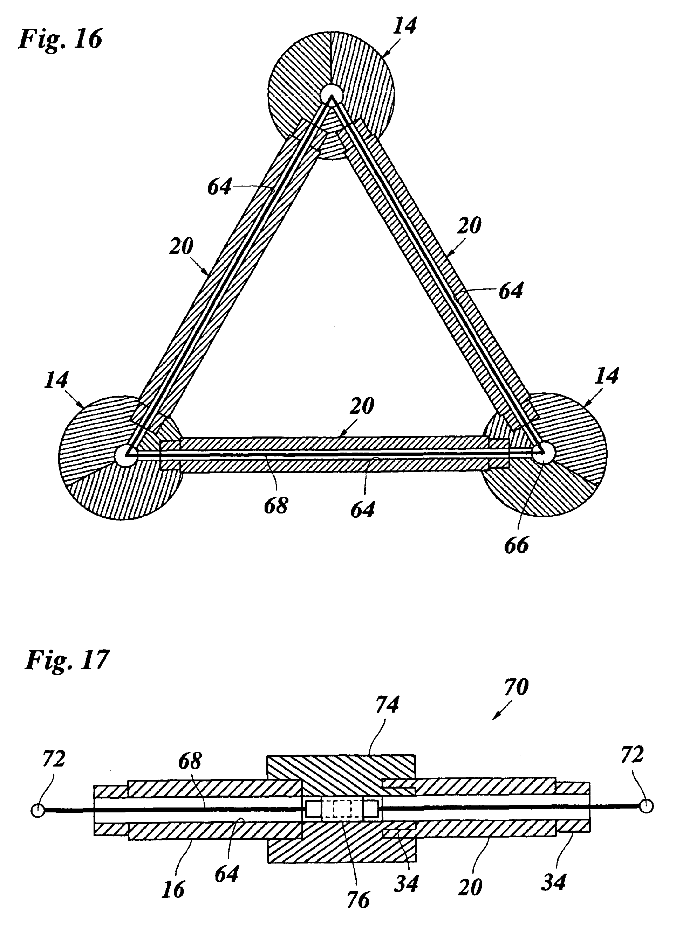

Figur 16 zeigt einen Schnitt durch einen dreieckigen Rahmen, der durch Knoten 14 und Stäbe 20 gebildet wird und Teil eines größeren Tragwerkes sein kann. Die Knoten 14 sind in diesem Fall mindestens dreiteilig, damit sich die Stäbe 20 in der bereits beschriebenen Weise einsetzen lassen. Die Besonderheit besteht hier darin, daß die Stäbe 20 einschließlich ihrer Eingriffsorgane als Rohre ausgebildet sind und somit einen in Längsrichtung durchgehenden zentralen Kanal 64 bilden. Auch die Knoten 14 weisen innere Hohlräume 66 auf, die die Kanäle 64 der verschiedenen Stäbe miteinander verbinden, so daß ein zusammenhängendes Hohlraumnetz gebildet wird, das sich durch das gesamte Tragwerk oder Teile desselben erstrecken kann. Dieses Hohlraumnetzwerk kann z. B. für elektrische Leitungen, Signalleitungen und dergleichen genutzt werden. Wenn die Teile, aus denen die Stäbe 20 und die Knoten 14 zusammengesetzt sind, fluiddicht miteinander verbunden sind, beispielsweise durch Verklebung oder Verschweißung, so ist das Hohlraumnetzwerk hermetisch abgeschlossen, so daß es auch als Leitungsnetz für flüssige oder gasförmige Medien dienen kann.

In dem in Figur 16 gezeigten Beispiel dient das Hohlraumnetzwerk zur Aufnahme einer Armierung, die beispielsweise durch Zugseile oder sonstige Zugglieder 68 gebildet wird. Wenn diese Zugglieder 68 mit ihren Enden in den jeweiligen Knoten 14 formschlüssig verankert sind, wird die Zugfestigkeit der durch den Stab 20 gebildeten Verbindung zwischen den betreffenden Knoten beträchtlich erhöht. Wenn das Zugglied unter Zugspannung steht, werden zudem die Knoten und der dazwischenliegende Stab fest zusammengespannt.

Im gezeigten Beispiel sind die Zugglieder 68 der einzelnen Stäbe 20 innerhalb der Knoten 14 miteinander verbunden, in Figur 16 zu einer dreieckigen Masche, im allgemeinen Fall zu einem Netzwerk, das dem durch die Kanäle 64 und die Hohlräume 66 gebildeten Hohlraumnetzwerk entspricht. Jede Masche des durch die Zugglieder 68 gebildeten Netzwerkes braucht nur an einer Stelle unter Zugspannung gesetzt werden, mit dem Effekt, daß alle zu der Masche gehörenden Knoten 14 und Stäbe 20 fest miteinander verspannt werden.

Bei der Montage eines in solcher Weise armierten Tragwerkes kann man beispielsweise so vorgehen, daß zunächst Teile der Knoten 14 und Teile, z.B. Halbstäbe, der Stäbe 20 zu einem Teiltragwerk miteinander verbunden werden. Bei diesem Teiltragwerk sind die Kanäle 64 und die Hohlräume 66 offen, so daß die Armierung eingelegt werden kann. Dabei kann die Armierung aus geschlossenen, vorgefertigten Maschen bestehen, ähnlich der dreieckigen Masche, die in Fig. 16 durch die Zugglieder 68 gebildet wird.

Je nach Konfiguration des Tragwerks kann das Netz auch die gesamte Struktur des Tragwerkes abbilden und dann in das Teiltragwerk eigelegt werden, so daß die Maschen des Netzes in den Kanälen 64 und Hohlräumen 66 aufgenommen werden. Sofern das als Armierung verwendete Netz zugelastisch ist oder bei Abkühlung schrumpft, kann es auch dazu dienen, eine Vorspannung zu erzeugen. Schließlich wird das Tragwerk durch Einsetzen der komplementären, bereits miteinander verbundenen Knotenteile und Teilstäbe komplettiert und durch Drehen der Stäbe 20 verriegelt.

Fig. 17 illustriert eine Möglichkeit, ein Zugglied 68, das sich durch das Innere eines Stabes 70 erstreckt, auch noch nachträglich, nach der Montage des Tragwerkes, unter Zugspannung zu setzen. Dabei zeigt Fig. 17 nur den einzelnen Stab 70 ohne angeschlossene Knoten und weitere Teile des Tragwerkes. Das Zugglied 68, beispielsweise ein Stahlseil, ein Hanfseil oder dergleichen, ist an den Enden mit Nippeln 72 versehen, die formschlüssig in den nicht gezeigten Knoten verankert sind. (In einer alternativen Ausführungsform können die Nippel auch an Stäben verankert sein, die über mindestens einen Knoten verbunden sind.)

Der Stab 70 ist in seiner Länge unterteilt in einen hohlen aber nicht geteilten Stab 16 und einen aus zwei Halbstäben zusammengesetzten Stab 20 mit zylindrischen Eingriffsorganen 34. Die Stäbe 16 und 20 sind durch einen Knoten 74 verbunden, der ähnlich wie die zuvor beschriebenen Knoten 14 aus zwei Teilen zusammengesetzt ist und Eingriffsorgane bildet, die zu den Eingriffsorganen 34 des Stabes 20 komplementär sind.

Der Stab 16 kann dagegen durch herkömmliche Steckverbindungen mit dem Knoten 74 und dem nicht gezeigten Knoten am entgegengesetzten Ende verbunden sein. Bei der Montage des Tragwerks werden dann ähnlich wie in Fig. 1 zunächst die Steckverbindungen hergestellt, und schließlich wird der Stab 20 in der beschriebenen Weise zwischen dem mehrteiligen Knoten 74 und einem nicht gezeigten mehrteiligen Knoten 14 eingesetzt und verriegelt. Die Teile des Knotens 74 und die Halbstäbe des Stabes 20 können miteinander verklebt werden, doch werden die Berührungsflächen der Eingriffsorgane 34 nicht mit dem Knoten 74 verklebt, damit der Knoten 74 um die Längsachse des Stabes 70 drehbar bleibt.

Die Stäbe 16 und 20 und der Knoten 74 bilden zusammen den durchgehenden Kanal 64, der das Zugglied 68 aufnimmt. Im Inneren des Knotens 74 ist jedoch ein Seilspanner 76 bekannter Bauart befestigt, mit dem sich das Zugglied spannen läßt. Beispielsweise kann der Seilspanner eine fest in dem Knoten 74 gehaltenen Muffe sein, die an einem Ende ein Rechtsgewinde und am anderen Ende ein Linksgewinde aufweist und mit entsprechenden Gewindebolzen an den Enden der beiden Abschnitte des Zugliedes 68 verschraubt ist, so daß sich das Zuglied spannen läßt, indem der Knoten 74 gedreht wird.

Sofern sich das Zugglied 68 bei Torsion oder Verdrillung verkürzt, wie es beispielsweise bei einem Seil der Fall ist, kann der Seilspanner auch einfach dadurch gebildet werden, daß der durch den Knoten 74 laufende Teil des Seils an diesem Knoten fixiert wird, so daß, wenn der Knoten gedreht wird, die beiderseits desselben liegenden Abschnitte des Seils in entgegengesetztem Drehsinn verdrillt werden. Gegebenenfalls muß dann durch eine Verdrehsicherung verhindert werden, daß sich der Knoten 74 unter der Zugspannung wieder in der entgegengesetzten Richtung zurückdreht. Die Verdrehsicherung kann beispielsweise durch einen quer durch den Knoten 74 und einen der Stäbe 16, 20 gesteckten Stift, ein zwischen dem Knoten 74 und einem der Stäbe wirkendes Klinkengesperre oder dergleichen gebildet werden.

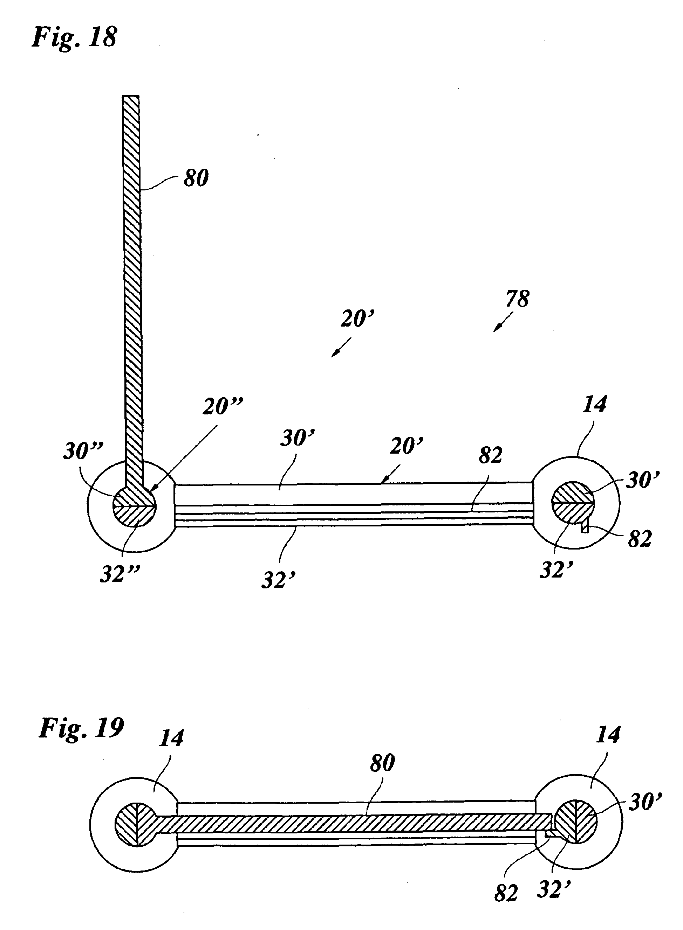

Die Stäbe des erfindungsgemäßen Tragwerkes können in einer modifizierten Ausführungsform auch durch flächige Elemente gebildet werden. Als Beispiel zeigen Fig. 18 und 19 einen Schnitt durch einen rechteckigen Rahmen 78 eines Tragwerks mit vier Knoten 14 (von denen nur zwei sichtbar sind), drei Stäben 20' und einem Stab 20", die jeweils aus Halbstäben 30', 32' bzw. 30" und 32" zusammengesetzt sind. Der Stab 20" ist drehbar zwischen den zugehörigen Knoten gehalten und sein Halbstab 30" bildet eine Klappe 80, die in der Lage ist, den gesamten Rahmen 78 auszufüllen.

In Fig. 18 ist diese Klappe 80 in geöffneter Stellung gezeigt. Wenn die Eingriffsorgane beispielsweise so gestaltet sind, wie im Zusammenhang mit Fig. 2 beschrieben wurde, ist die Stellung gemäß Fig. 18 zugleich die Stellung, in der die Teile des Knotens nicht formschlüssig durch diese Eingriffsorgane verriegelt werden. Wenn die Klappe 80 in die in Fig. 19 gezeigte, geschlossene Position geschwenkt wird, so wird dagegen auch die Verriegelung der Teile des Knotens 14 hergestellt.

Die drei übrigen Stäbe 20' bilden jeweils einen Anschlag 82 für die Klappe 80. Dieser Anschlag sitzt jeweils an dem Halbstab 32' und wird in die wirksame Position geschwenkt, wenn die beiden Halbstäbe 30' und 32' in die Verriegelungsposition gedreht werden. Wenn schließlich noch das freie (in Fig. 19 das rechte Ende) der Klappe 80 auf irgendeine Weise mechanisch an den Anschlag 82 verriegelt wird, so sind auch der Stab 20" und der ihm gegenüberliegende Stab 20' in der Verriegelungsposition fixiert.

## Patentansprüche

1. Stabtragwerk mit Knoten (14, 74) und mit Stäben (20, 20', 20"), die durch Eingriffsorgane (34, 36) mindestens in der Richtung quer zu ihrer Längsrichtung formschlüssig zwischen den Knoten (14, 74) gehalten sind, wobei mindestens zwei durch einen Stab (20, 20', 20") verbundene Knoten (14, 74) aus mehreren Teilen (24, 26; 24', 26') zusammengesetzt sind, **dadurch gekennzeichnet, daß** die Eingriffsorgane (36) jedes Knotens (14, 74) eine ringförmige Nut bilden, die je zur Hälfte durch ein erstes Teil (24, 24') und ein zweites Teil (26, 26') des Knotens (14, 74) gebildet wird, in welche die Eingriffsorgane (34) des Stabes (20, 20', 20") tangential einführbar sind, und daß die Eingriffsorgane (34, 36) durch relative Verdrehung des Stabes (20, 20', 20") und der Knoten (14, 74) um eine in Längsrichtung des Stabes (20, 20', 20") verlaufende Achse in eine Position überführbar sind, in der sie die mehreren Teile (24, 26; 24', 26') des Knoten (14,74) formschlüssig zusammenhalten.

2. Stabtragwerk nach Anspruch 1, **dadurch gekennzeichnet, daß** die Eingriffsorgane (34, 36) an den aus mehreren Teilen (30, 32; 24, 26) gebildeten Stäben und/oder Knoten sich jeweils zu einer rotationssymmetrischen Struktur ergänzen.

3. Stabtragwerk nach Anspruch 1 oder 2, **dadurch gekennzeichnet, daß** mindestens ein Stab (20) aus zwei Halbstäben (30, 32) zusammengesetzt ist, die in einer längsverlaufenden Teilungsebene (28) aneinander anliegen.

4. Stabtragwerk nach einem der vorstehenden Ansprüche, **dadurch gekennzeichnet, daß** die Eingriffsorgane (34, 36) den Stab (20) und den Knoten (14) auch in Längsrichtung des Stabes formschlüssig aneinander verriegeln.

5. Stabtragwerk nach Anspruch 4, **dadurch gekennzeichnet, daß** die Eingriffsorgane (34, 36) gewindeartige Strukturen (42, 44, 46, 48, 50) aufweisen, durch welche der Knoten (14) bei der Verdrehung des Stabes (20) axial gegen das Ende des Stabes gespannt wird.

6. Stabtragwerk nach einem der vorstehenden Ansprüche, **dadurch gekennzeichnet, daß** die Stäbe (20) innere Kanäle (64) aufweisen und die Knoten (14) innere Hohlräume (66) aufweisen, die die Kanäle (64) zu einem Hohlraumnetzwerk verbinden.

7. Stabtragwerk nach Anspruch 6, **dadurch gekennzeichnet, daß** das Hohlraumnetzwerk eine Armierung (68) aufnimmt.

8. Stabtragwerk nach Anspruch 7, **dadurch gekennzeichnet, daß** die Armierung ein Zugglied (68) aufweist, das sich durch mindestens einen Stab (16, 20) oder Knoten (14) erstreckt und mehrere Elemente, d. h. Stäbe oder Knoten, des Tragwerks zugfest miteinander verbindet.

9. Stabtragwerk nach Anspruch 8, **dadurch gekennzeichnet, daß** zwei Stäbe (16, 20) durch einen relativ zu diesen Stäben drehbaren Knoten (74) zu einem längeren Stab (70) verbunden sind, durch welchen sich das Zugglied (68) erstreckt, und daß der Knoten (74) einen Spannmechanismus (76) zum Spannen des Zuggliedes enthält.

10. Stabtragwerk nach Anspruch 6, **dadurch gekennzeichnet, daß** die Kanäle (64) und Hohlräume (66) nach außen fluiddicht abgeschlossen sind und einen Teil eines Leitungsnetzes bilden.

11. Stabtragwerk mit Knoten (14') und mit Stäben (20), die durch Eingriffsorgane (34, 36) mindestens in der Richtung quer zu ihrer Längsrichtung formschlüssig zwischen den Knoten (14') gehalten sind, **dadurch gekennzeichnet, daß** mindestens ein Stab (20), der zwei Knoten (14') verbindet, aus mindestens zwei komplementären Teilstäben (30, 32) zusammengesetzt ist, wobei die Teilstäbe (30, 32) an beiden Enden Eingriffsorgane (34) aufweisen, die als exzentrisch angeordnete vorspringende Zapfen ausgebildet sind, und daß die dazu komplementären Eingriffsorgane (36) jedes Knotens (14') eine ringförmige Nut bilden, in welche die zapfenförmigen Eingriffsorgane (34) des Stabes (20) mittels einer Einschleusungsnut (60) einführbar sind, wobei die Einschleusungsnut (60) die ringförmige Nut mit einer Seitenfläche des Knotens (14') verbindet, und daß die Eingriffsorgane (34, 36) durch relative Verdrehung des Stabes (20) und der Knoten (14') um eine in Längsrichtung des Stabes (20) verlaufende Achse in eine Position überführbar sind, in der sie die mehreren Teile(30, 32) des Stabes (20) formschlüssig zusammenhalten.

## Claims

1. A bar-type supporting framework having nodes (14, 74) and bars (20, 20', 20") held between the nodes (14, 74) in form-fitting manner at least in the direction transverse to the longitudinal direction of the bar by means of engagement elements (34, 36), at least two nodes (14, 74) that are connected by a bar (20, 20', 20") being composed of a plurality of parts (24, 26; 24', 26'), **characterized in that** the engagement elements (36) of each node (14, 74) form an annular groove that is formed to one half by a first part (24, 24') and to the other half by a second part (26, 26') of the node (14, 74) and into which the engagement elements (34) of the bar (20, 20', 20") can be introduced tangentially, and **in that** are the engagement elements (34, 36) are transferable into a position in which they form-fittingly hold together the plurality of parts (24, 26; 24', 26') by relative rotation of the bars (20, 20', 20") and the nodes (14, 74) about an axis extending in longitudinal direction of the bars (20, 20', 20").

2. The framework according to claim 1, **characterized in that** the engagement elements (34, 36) at the bars and/or nodes formed of a plurality of parts (30, 32; 24, 26) supplement each other to form a rotationally symmetric structure.

3. The framework according to claim 1 or 2, **characterized in that** at least one bar (20) is composed of two half-bars (30, 32) fitted together at a longitudinally extending separating plane (28).

4. The framework according to any of the preceding claims, **characterized in that** the engagement elements (34, 36) are configured for a form-fitting locking of the bar (20) and the node (14) at one another also in longitudinal direction of the bar.

5. The framework according to claim 4, **characterized in that** the engagement elements (34, 36) have thread-like structures (42, 44, 46, 48, 50) adapted to tighten the node (14) axially against the end of the bar (20) when the bar is rotated.

6. The framework according to any of the preceding claims, **characterized in that** the bars (20) have internal passages (64), and the nodes (14) have internal cavities (66) interconnecting the passages (64) to form a network of cavities.

7. The framework according to claim 6, **characterized in that** the network of cavities accommodates an armor (68).

8. The framework according to claim 7, **characterized in that** the armor includes a tension element (68) that passes through at least one bar (16, 20) or node (14) and connects a plurality of elements of the framework, i.e. bars or nodes, with tensile strength.

9. The framework according to claim 8, **characterized in that** two bars (16, 20) are connected to form a longer bar (70) by means of a node (24) that is rotatable relative to these bars, the tension element (68) passes through this node, and the node (74) includes a tensioning mechanism (76) for tensioning the tension element.

10. The framework according to claim 6, **characterized in that** the passages (64) and cavities (66) are fluid-tightly sealed from the environment and form part of a piping network.

11. A bar-type supporting framework having nodes (14') and bars (20) held between the nodes (14') in form-fitting manner at least in the direction transverse to the longitudinal direction of the bar by means of engagement elements (34, 36), **characterized in that** at least one bar (30, 32) that connects two nodes (14') is composed of at least two complementary part-bars (30, 32), said part-bars being formed at both ends with engagement elements (34) that are configured as eccentrically arranged projecting pins, and the complementary engagement elements (36) of each node (14') form an annular groove into which the pin-shaped engagement elements (34) of the bar (20) can be introduced via an introduction groove (60) that connects the annular groove with a side face of the node (14'), and **in that** are the engagement elements (34, 36) are transferable into a position in which they form-fittingly hold together the plurality of parts (30, 32) of the bar (20) by relative rotation of the bar (20) and the nodes (14') about an axis extending in longitudinal direction of the bar (20).

## Revendications

1. Structure porteuse de type à barres, comportant des noeuds (14, 74) et des barres (20, 20', 20") qui sont maintenues par complémentarité de formes entre les noeuds (14, 74) par l'intermédiaire d'organes de prise (34, 36) au moins dans une direction transversale à leur direction longitudinale, dans laquelle au moins deux noeuds (14, 74) reliés par une barre (20, 20', 20") sont composés de plusieurs parties (24, 26 ; 24', 26'), **caractérisée en ce que** les organes de prise (36) de chaque noeud (14, 74) forment une gorge annulaire dont une moitié est formée par une première partie (24, 24') et une autre moitié est formée par une seconde partie (26, 26') du noeud (14, 74), dans laquelle les organes de prise (34) de la barre (20, 20', 20") peuvent être introduits de manière tangentielle, et **en ce que** les organes de prise (34, 36) peuvent être transférés par une rotation relative de la barre (20, 20', 20") et des noeuds (14, 74) autour d'un axe s'étendant dans une direction longitudinale de la barre (20, 20', 20"), dans une position dans laquelle ils maintiennent la pluralité de parties (24, 26 ; 24', 26') des noeuds (14, 74) par complémentarité de formes.

2. Structure porteuse de type à barres selon la revendication 1, **caractérisée en ce que** les organes de prise (34, 36) agencés sur les barres et/ou les noeuds constitués de plusieurs parties (30, 32 ; 24, 26) se complètent mutuellement pour former une structure à symétrie de rotation.

3. Structure porteuse de type à barres selon la revendication 1 ou 2, **caractérisée en ce qu'**au moins une barre (20) est composée de deux demies barres (30, 32) qui s'appliquent l'une contre l'autre dans un plan de séparation (28) s'étendant longitudinalement.

4. Structure porteuse de type à barres selon l'une quelconque des revendications précédentes, **caractérisée en ce que** les organes de prise (34, 36) bloquent la barre (20) et le noeud (14) l'un contre l'autre par complémentarité de formes, également dans la direction longitudinale de la barre.

5. Structure porteuse de type à barres selon la revendication 4, **caractérisée en ce que** les organes de prise (34, 36) comportent des structures analogues à un filetage (42, 44, 46, 48, 50) au moyen desquelles le noeud (14) est mis axialement sous tension contre l'extrémité de la barre lors de la rotation de la barre (20).

6. Structure porteuse de type à barres selon l'une quelconque des revendications précédentes, **caractérisée en ce que** les barres (20) comportent des canaux intérieurs (64) et les noeuds (14) comportent des cavités intérieures (66) qui relient les canaux (64) à un réseau de cavités.

7. Structure porteuse de type à barres selon la revendication 6, **caractérisée en ce que** le réseau de cavités reçoit une armure (68).

8. Structure porteuse de type à barres selon la revendication 7, **caractérisée en ce que** l'armure comporte un élément de traction (68) qui s'étend à travers au moins une barre (16, 20) ou un noeud (14) et assemble plusieurs éléments de la structure porteuse, c'est-à-dire des barres ou des noeuds, de manière résistante à la traction.

9. Structure porteuse de type à barres selon la revendication 8, **caractérisée en ce que** deux barres (16, 20) sont reliées à une barre plus longue (70) par l'intermédiaire d'un noeud (74) pouvant tourner par rapport à cette barre à travers laquelle l'élément de traction (68) s'étend, et **en ce que** le noeud (74) contient un mécanisme de tension (76) pour mettre l'élément de traction sous tension.

10. Structure porteuse de type à barres selon la revendication 6, **caractérisée en ce que** les canaux (64) et les cavités (66) sont obturés vers l'extérieur de manière étanche aux fluides et forment une partie d'un réseau de conduites.

11. Structure porteuse de type à barres comportant des noeuds (14') et des barres (20) qui sont maintenues par complémentarité de formes entre les noeuds (14') par l'intermédiaire d'organes de prise (34, 36) au moins dans une direction transversale à leur direction longitudinale, **caractérisée en ce qu'**au moins une barre (20) reliant deux noeuds (14') est composée d'au moins deux barres partielles complémentaires (30, 32), dans laquelle les barres partielles (30, 32) comportent des organes de prise (34) aux deux extrémités, lesquels organes de prise sont conçus sous forme de tourillons en saillie agencés de manière excentrée, et **en ce que** les organes de prise (36) complémentaires de ceux-ci de chaque noeud (14') forment une gorge annulaire dans laquelle les organes de prise en forme de tourillons (34) de la barre (20) peuvent être introduits au moyen d'une gorge d'insertion (60), dans laquelle la gorge d'insertion (60) relie la gorge annulaire à une surface latérale du noeud (14'), et **en ce que** les organes de prise (34, 36) peuvent être transférés par une rotation relative de la barre (20) et du noeud (14') autour d'un axe s'étendant dans une direction longitudinale de la barre (20) dans une position dans laquelle ils maintiennent la pluralité de parties (30, 32) de la barre (20) par complémentarité de formes.
